# EUROPEAN PATENT SPECIFICATION

(11) **EP 4 089 876 B1**
(45) Date of publication and mention of the grant of the patent: **06.08.2025**
(21) Application number: 22163298.7
(22) Date of filing: 21.03.2022
(51) Int. Cl.: H02J 7/00

(54) **CHARGING/DISCHARGING APPARATUS**
LADE-/ENTLADEVORRICHTUNG
APPAREIL DE CHARGEMENT/DÉCHARGEMENT

(30) Priority: 14.05.2021 JP 2021082142
(43) Date of publication of application: 16.11.2022
(73) Proprietor: Suzuki Motor Corporation, Hamamatsu-shi, Shizuoka 432-8611 (JP)
(72) Inventor: MITSUOKA, Shigehi, 432-8611 Hamamatsu-shi (JP); OSANAI, Hiroki, 432-8611 Hamamatsu-shi (JP)
(74) Representative: Haseltine Lake Kempner LLP

(56) References cited:
- EP-A1- 3 582 360
- JP-A- 2013 135 533
- US-A1- 2021 050 738

## Description

### [Technical Field]

This invention relates to a charging/discharging apparatus.

### [Background of the Invention]

The document JP 2013-135533 A discloses a power storage system as an independent drive system for supplying electric power to a base station (load) of a mobile phone installed in a remote place where commercial power cannot be drawn, such as a mountainous area. This power storage system includes a plurality of battery units, a power generation unit, a power conversion unit, a charging power supply unit, and a control unit.

In this power storage system, when a battery unit to be discharged is switched from a first battery unit to a second battery unit, back-up is performed by a third battery unit, so that even when discharge from the second battery unit fails, power is supplied from the third battery unit to avoid suspension of an operation of the load.
The document EP-A-3582360 discloses a hierarchical BMU system that assigns unique ID to exchangeable battery modules in the case of a change.

### [Summary of the Invention]

### [Problem to be solved by the Invention]

Incidentally, in a case where a reused product of a battery module which used to be mounted on a vehicle is used as a battery unit of the power storage system as described in Patent Literature 1, there are the following problems.

The battery module mounted on the vehicle has a controller (hereinafter referred to as "BMU (Battery Management Unit)") that manages a voltage value and the like of a storage battery for each cell. This BMU may use a CAN (Controller Area Network) as a standard for communicating with other controllers.

In the CAN, an ID is assigned to each signal. However, in a case of using reused products of battery modules having the same specifications, IDs to be used for BMUs of all the battery modules are the same, none of the battery modules being supposed to be used with others. Due thereto, if one communication control device attempts to communicate with the BMUs of the battery modules having the same specifications through the CAN, signals are duplicated to thereby make it difficult to individually control the BMUs.

In this case, for example, if the communication control device is provided for each BMU, the BMUs of the battery modules having the same specifications can be individually controlled. However, since the same number of communication control devices as the battery modules is required, the cost is high even though an inexpensive reused product is used.

This invention has been made in view of the above circumstances, and an object of this invention is to provide a charging/discharging apparatus capable of, even when battery modules with the same specifications which used to be mounted on a vehicle are reused, individually and properly controlling the reused battery modules by one communication control device, and to reliably supply the local BMU and the communication control device when the voltage from the power supply device is less than their minimum operating voltage.

### [Means to solve the problem]

There is provided a charging/discharging apparatus as defined by the independent claim 1. In detail, the apparatus includes, among others: a power supply device to supply electric power; an electric load; a connection path to be selectively connected to one of the power supply device and the electric load; and at least one battery module group to be connected to the connection path, wherein the at least one battery module group includes: a plurality of battery modules to be connected, in parallel to each other, to the connection path; a plurality of first switches each disposed between the corresponding battery module and the connection path, each of the first switches switching between an ON state where the corresponding battery module and the connection path are interconnected, and an OFF state where these are disconnected from each other; and a communication control device connected to the connection path, which controls the first switches, the battery modules respectively include: a plurality of storage batteries; and a plurality of BMUs communicatable with the communication control device using a common identification signal, each BMU managing a state of the corresponding storage battery, and the communication control device: includes a storage unit for storing voltage values or SOCs of the storage batteries in association with the respective battery modules; and when the connection path is connected to the power supply device, places only one switch of the first switches in the ON state based on the stored voltage values or SOCs in the storage unit.

### [Effect of the Invention]

According to this invention, it is possible to provide a charging/discharging apparatus capable of, even when battery modules with the same specifications which used to be mounted on a vehicle are reused, individually and properly controlling the reused battery modules by one communication control device, and to reliably supply the local BMU and the communication control device when the voltage from the power supply device is less than their minimum operating voltage.

### [Brief description of figures]

Fig. 1 is a schematic configuration diagram of a charging/discharging apparatus according to a first embodiment of this invention.
Fig. 2 is a diagram illustrating an example of voltage values stored in a storage unit of the charging/discharging apparatus.
Fig. 3 is a schematic configuration diagram of a charging/discharging apparatus according to a second embodiment of this invention.
Fig. 4 is an example of a timing chart at a battery module switching in the charging/discharging apparatus.

### [Embodiment(s) of the Invention]

A charging/discharging apparatus according to an embodiment of this invention includes: a power supply device to supply electric power; an electric load; a connection path to be selectively connected to one of the power supply device and the electric load; and at least one battery module group to be connected to the connection path, wherein the at least one battery module group includes: a plurality of battery modules to be connected, in parallel to each other, to the connection path; a plurality of first switches each disposed between the corresponding battery module and the connection path, each of the first switches switching between an ON state where the corresponding battery module and the connection path are interconnected, and an OFF state where these are disconnected from each other; and a communication control device connected to the connection path, which controls the first switches, the battery modules respectively include: a plurality of storage batteries; and a plurality of BMUs communicatable with the communication control device using a common identification signal, each BMU managing a state of the corresponding storage battery, and the communication control device: includes a storage unit for storing voltage values or SOCs of the storage batteries in association with the respective battery modules; and when the connection path is connected to the power supply device, places only one switch of all the first switches in the ON state based on the stored voltage values or SOCs in the storage unit.

### [Embodiments]

Hereinafter, a charging/discharging apparatus according to embodiments of this invention will be described with reference to the drawings.

### (First embodiment)

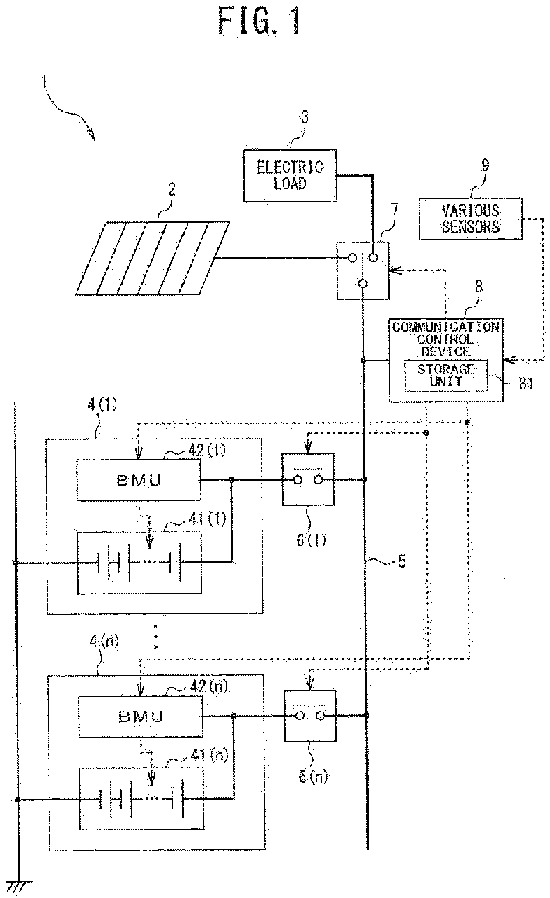

As illustrated in Fig. 1, a charging/discharging apparatus 1 according to a first embodiment includes a power generation device 2 as a power supply device, an electric load 3, a plurality of battery modules 4, a connection path 5, first switches 6, a second switch 7, and a communication control device 8. Note that the charging/discharging apparatus 1 according to this embodiment corresponds to a case where the number of battery module groups in a charging/discharging apparatus 101 according to a second embodiment described later is one.

In the charging/discharging apparatus 1 according to the present embodiment, *n* battery modules 4 are provided (i.e., the number of battery modules 4 is *n*: a natural number of 2 or more). In the present embodiment, in order to discriminate the plurality of battery modules 4 from each other, the plurality of battery modules 4 are referred to as battery modules 4(1) to 4(n), respectively. Note that the battery module is simply referred to as "battery module 4", indicating any one of the battery modules without specifying one of them.

The power generation device 2 is connected to, through the second switch 7, the connection path 5 to thereby supply electric power to the plurality of battery modules 4 and the communication control device 8.

The power generation device 2 is a power generator, such as a solar photovoltaic unit or a wind power generator, which generates electricity using renewable energy. The power generation device 2 may be a hydroelectric generator, a geothermal power generator, or a biomass power generator, which generates electricity using renewable energy.

The electrical load 3 includes an electrical device equipped with a light emitter, such as a light or an electronic message board, but is not limited to the electrical device.

The battery modules 4(1) to 4(n) are connected to, in parallel to each other, the connection path 5. Each battery module 4 has a storage battery 41 and a BMU (Battery Management Unit) 42. The battery modules 4 are applied with the reused battery modules. That is, battery modules which used to be mounted on a vehicle are reused as the battery modules 4 in the charging/discharging apparatus 1.

In the present embodiment, in order to identify the storage batteries 41 and the BMUs 42 among the battery modules 4(1) to 4(n), the storage batteries 41 and the BMUs 42 are denoted with numerals "1" to "n" corresponding to the respective battery modules 4(1) to 4(n), indicating the storage batteries 41(1) to 41(n) and the BMUs 42(1) to 42(n). The storage battery and the BMU are simply referred to as "storage battery 41" and "BMU 42" respectively, respectively indicating any one storage battery and any one BMU without specifying their belongings to the battery modules 4(1) to 4(n).

For example, the storage battery 41 is a chargeable and dischargeable secondary battery, such as a lithium ion battery. As the storage battery 41, for example, a lithium ion battery which used to be mounted on a vehicle is reused.

Each BMU 42 monitors and manages a state of the storage battery 41 such as a voltage value or a remaining capacity (SOC: state of charge) of the storage battery 41. Each BMU 42 calculates the SOC based on a charge/discharge current of the storage battery 41 and the like.

Each BMU 42 is communicably connected to the communication control device 8, and is configured to transmit, at a predetermined timing, various information such as the voltage value and the SOC of the storage battery 41 with an identification signal described later to the communication control device 8. The BMUs 42 use the CAN (Controller Area Network) as a communication standard for communicating with the communication control device 8.

Each of the BMUs 42(1) to 42(n) has a CAN_ID as an identification signal for identifying the own device when communicating with the communication control device 8. In the present embodiment, the CAN_IDs of the BMUs 42(1) to 42(n) are common to each other due to the same specifications of the BMUs 42(1) to 42(n). That is, the BMUs 42(1) to 42(n) use the same CAN_IDs.

A reason therefor is that one battery module is mounted on each vehicle to thereby render individual identification unnecessary and allow battery modules to have the same specifications and the same CAN_IDs, and the charging/discharging apparatus 1 reuses these battery modules.

Each first switch 6 is provided between the corresponding battery module 4 and the connection path 5, capable of switching between an ON state in which the corresponding battery module 4 and the connection path 5 are interconnected and an OFF state in which they are disconnected from each other.

In the present embodiment, in order to identify the first switches 6 among the battery modules 4(1) to 4(n), the first switches 6 are also be denoted with numerals "1" to "n" corresponding to the respective battery modules 4(1) to 4(n), indicating first switches 6(1) to 6(n). The first switch is simply referred to as " first switch 6", indicating any one first switch without specifying its belonging to the battery modules 4(1) to 4(n).

Each first switch 6 is controlled by the communication control device 8, so as to switch between the ON state and the OFF state. In other words, the first switches 6 are each electrically connected to the communication control device 8, to thereby be individually controlled by the communication control device 8.

The battery modules 4(1) to 4(n) are connected to, in parallel to each other, the connection path 5. The second switch 7 is connected to one end of the connection path 5.

The second switch 7 is disposed among the connection path 5, the power generation device 2, and the electric load 3, to switch between an ON state in which the connection path 5 is connected to either one of the power generation device 2 and the electric load 3, and an OFF state in which the connection path 5 is disconnected from both of them.

That is, the second switch 7 is placed into an electrical generation on-state to interconnect the first connecting path 5 and the power generation device 2, an electrical discharge on-state to interconnect the connection path 5 and the electrical load 3, or an off-state to disconnect the connection path 5 from each of the power generation device 2 and the electrical load 3.

The switching among the electrical generation on-state, the electrical discharge on-state, and the off-state is achieved by the communication control device 8. When the communication control device 8 is not yet powered on, e.g., the charging/discharging apparatus 1 is rendered OFF, it is preferable that the second switch 7 is placed in the electrical generation on-state in order to ensure electrical power necessary for starting the charging/discharging apparatus 1.

The communication control device 8 includes a computer unit including a CPU (Central Processing Unit), a RAM (Random Access Memory), a ROM (Read Only Memory), an input port, and an output port. In the ROM of the computer unit, a program for causing the computer unit to function as the communication control device 8 is stored together with various constants, etc. That is, when the CPU executes the program stored in the ROM using the RAM as a work area, the computer unit functions as the communication control device 8 in the present embodiment.

The communication control device 8 is connected to the connection path 5, and is configured such that power is supplied from the power generation device 2 or at least one of the battery modules 4(1) to 4(n) via the connection path 5. The communication control device 8 controls the first switches 6 and the second switch 7 to switch between the ON-state and the OFF-state thereof.

The communication control device 8 has various sensors 9 connected thereto. In the present embodiment, the sensors 9 which are required depending on types of the power generation device 2 and the electrical load 3 are connected thereto. For instance, the sensors 9 includes sensors, such as a wind sensor, an illuminance sensor, and a temperature sensor which are capable of detecting changes in external environment. In a case where the electrical load 3 is a light, the communication control device 8 may be equipped with a timer which controls a period of time for which the light is kept on or a time when the light should be turned on.

In the present embodiment, the communication control device 8 is provided with a storage unit 81. The storage unit 81 may include, for example, the above-mentioned RAM, or may include a storage device different from the above-mentioned RAM.

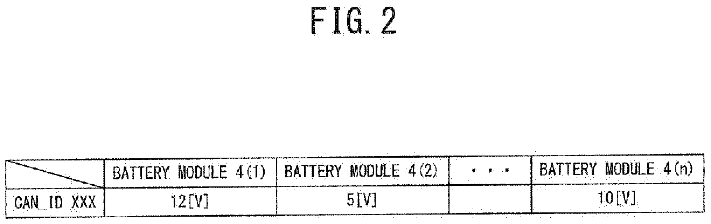

The storage unit 81 of the communication control device 8 stores a voltage value or SOC of the storage battery 41 for each battery module 4. Specifically, as illustrated in Fig. 2, the storage unit 81 stores, in advance, voltage values or SOCs of the storage batteries 41(1) to 41(n) in association with the respective battery modules 4(1) to 4(n) with the common CAN_ID.

These voltage values or SOCs stored in the storage unit 81 in advance are, for example, voltage values measured at and sent from the respective BMUs 42 at the timing of switching the respective first switches 6 from the ON state to the OFF state in a case where it is necessary to generally assess them, e.g., when the charging/discharging apparatus 1 is initially activated. Specifically, the BMUs 42 are each configured to send, during the ON state of the corresponding first switch 6, own information (voltage value and the like of the corresponding storage battery 41) to the communication control device 8 repeatedly (i.e., the BMU 42 does not send the information if the corresponding first switch 6 is in OFF state). Then, communication control device 8 temporarily places one of the first switches 6, with the other first switches placed in the OFF state, into the ON state and thereafter, at the timing of sending an instruction to the one first switch 6 to render it OFF, stores the information from the BMU 42 of the battery module 4 corresponding to the one first switch 6 to which the instruction is sent, associating it with this BMU 42 (i.e., identifying, based on the one first switch 6, one of the BMUs 42 which sends the information). In this case, although the communication control device 8 sequentially receives the information until the one first switch 6 is switched from ON state to OFF state, it finally stores the received information (the latest information from said BMU 42) at the timing of sending the instruction, to the storage unit 81.

For example, when the first switch 6(1) is the in ON state and the other first switches 6(2) to 6(n) are each in the OFF state, the communication control device 8 acquires, at the timing of sending the instruction to the first switch 6(1) to render it OFF, a voltage value or SOC of the storage battery 41(1) sent from the BMU 42(1) of the battery module 4(1) corresponding to the first switch 6(1) and simultaneously associates the acquired voltage value with the battery module 4(1) (i.e., identifies the acquired voltage value or SOC as that of the battery module 4(1)), to thereby store the associated voltage value in the storage unit 81. Subsequently, for each of the other first switches 6(2) to 6(n), a similar process is performed, thereby storing the voltage values or SOCs in association with the respective battery modules 4(1) to 4(n) with the common CAN_ID, as shown in FIG. 2.

As mentioned above, the communication control device 8 is to control the BMUs 42(1) to 42(n) with the common CAN_ID. Thus, if attempting to control the BMUs 42(1) to 42(n) at the same time, the communication control device 8 cannot individually control the BMUs 42(1) to 42(n) due to the duplicated CAN_IDs. That is, in this case, when acquiring voltage value(s) of the storage battery(s) 41 sent from any BMU(s) 42, the communication control device 8 cannot identify the sending BMU(s) 42. As a result, it is difficult to determine which of the first switches 6(1) to 6(n) should be switched based on the acquired voltage value(s).

Then, in the present embodiment, the communication control device 8 adopts the following configuration so that the BMUs 42(1) to 42(n) can be individually controlled even when the common CAN_ID is used in the BMUs 42(1) to 42(n).

That is, the communication control device 8 is configured to apply one of the first switches 6(1) to 6(n) of which a state (ON or OFF state) is different from that of the other first switches to thereby acquire an information sent from the BMU 42 corresponding to the one first switch, associating this information with one of the battery modules corresponding thereto.

Specifically, firstly, the communication control device 8, using the above-mentioned method, stores the voltage values of the storage batteries 41(1) to 41(n) in the storage unit 81 in advance, in association with the respective battery modules 4(1) to 4(n). Then, when the connection path 5 is connected to the power generation device 2, e.g., at the time of charging the battery modules, the communication control device 8 places one switch of the first switches 6(1) to 6(n) into the ON state with all the others rendered OFF, said one switch corresponding to the battery module 4 of which the storage battery 41 has a lowest voltage value among the voltage values of the storage batteries 41(1) to 41(n) stored in the storage unit 81. In other words, at that time, the communication control device 8 places only said one switch in the ON state. Thereby, one of the first switches 6(1) to 6(n) is different from, in ON/OFF state, the other switches, enabling the communication control device 8 to identify one of the BMUs 42 corresponding to the one first switch to thereby communicate therewith on a one-to-one. Due thereto, the voltage value stored in the storage unit 81 in advance can be updated with another voltage value sequentially sent from the identified BMU 42, enabling the communication control device 8 to properly control the battery modules 4(1) to 4(n) (i.e., to preferentially charge one of the storage batteries with a lowest voltage value or to preferentially discharge one of the storage batteries with a highest voltage value) based on the latest information (the latest voltage values).

As described above, the charging/discharging apparatus 1 is configured to communicate with, by applying one of the first switches 6 in a different state, one of the BMUs 42 corresponding to the one first switch 6 on a one-to-one.

With this configuration, even when the common CAN_ID is used in the BMUs 42 of the battery modules 4(1) to 4(n), the charging/discharging apparatus 1 can manage the voltage values of the storage batteries 41(1) to 41(n) associating them with the respective battery modules 4(1) to 4(n).

In addition, when the connection path 5 is connected to the power generation device 2, the charging/discharging apparatus 1 places only one of the first switches 6 in the ON state based on the stored voltage values in the storage unit 81.

With this configuration, in the charging/discharging apparatus 1, the communication control device 8 and the BMU 42 can communicate with each other on a one-to-one basis while the battery module 4 of the low voltage value is charged in preference to the other battery modules 4, for example. In this way, even when a plurality of reused products of the battery modules 4 with the same specifications, which used to be mounted on the vehicle, are used, the plurality of battery modules 4 can be individually and properly controlled by one communication control device 8.

Note that: in a case where two or more of the storage batteries 41(1) to 41(n) have the same voltage value, one of the first switches corresponding to any one of the two or more storage batteries is to be placed into the ON state.

Further, the charging/discharging apparatus 1 can control a plurality of BMUs 42 by one communication control device 8 without changing the specifications (e.g., without changing the CAN_ID for the respective BMUs 42), which contributes to cost reduction. Hence, the advantage of reusing battery modules can be utilized.

Further, the charging/discharging apparatus 1 includes the second switch 7 disposed among the connection path 5, the power generation device 2, and the electric load 3, the second switch 7 switching between an ON state in which the connection path 5 is connected to one of the power generation device 2 and the electric load 3, and an OFF state in which the connection path 5 is disconnected from both of them.

With this configuration, for example, the charging/discharging apparatus 1 can switch a power supply source, for the electric load 3, between the power generation device 2 and the battery module 4 as needed, and ensure power supply to the communication control device 8 in a state where there is neither charging from the power generation device 2 nor discharging to the electric load 3. In this way, the charging/discharging apparatus 1 can function as an independent charging/discharging apparatus.

Further, the charging/discharging apparatus 1 includes the power generation device 2 to generate power using renewable energy. In this way, the charging/discharging apparatus 1 can be independently installed outdoors.

Further, the charging/discharging apparatus 1 includes the electric load 3 with a light-emitting body as a load. In this way, the charging/discharging apparatus 1 can be used for lighting or an electric bulletin board that are independently installed outdoors.

### (Second embodiment)

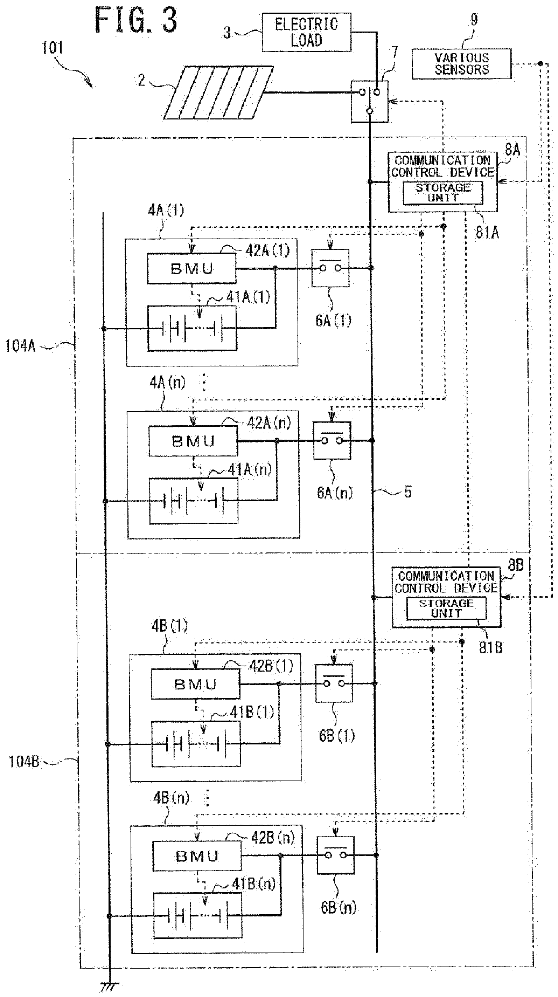

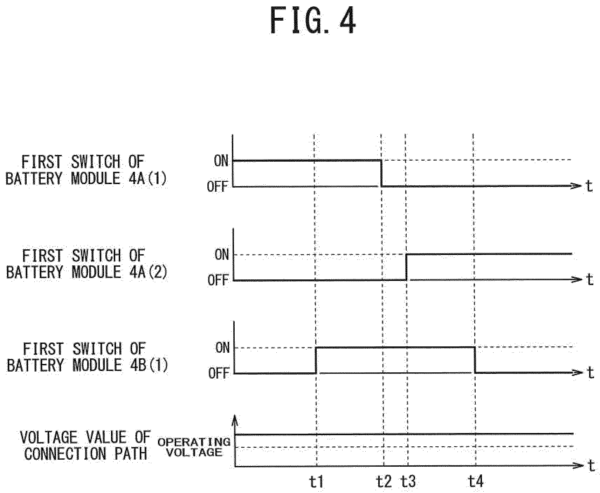

Next, a charging/discharging apparatus 101 according to a second embodiment will be described with reference to Figs. 3 and 4.

As illustrated in Fig. 3, the charging/discharging apparatus 101 according to the present embodiment includes a plurality of battery module groups 104 each corresponding to a configuration of the above-mentioned first embodiment including the battery modules 4, the first switches 6, and the communication control device 8.

In the present embodiment, two battery module groups 104 are provided, and in order to distinguish the two battery module groups 104 from each other, one is represented by a battery module group 104A and the other is represented by a battery module group 104B. The battery modules 4A of the battery module group 104A and the battery modules 4B of the battery module group 104B used to be mounted on vehicles of different types and hence, have different common CAN_IDs. That is, the common CAN_ID of the battery modules 4A is different from that of the battery modules 4B.

In the present embodiment, an example including the two battery module groups 104 will be described. Alternatively, three or more battery module groups 104 with different common CAN_IDs may be adopted.

Further, in the present embodiment, in order to identify the battery modules 4, the first switches 6, and the communication control devices 8, these are each denoted with numeral "A" or "B" in accordance with the corresponding battery modules group 104A, 104B. Similarly, the storage batteries 41, the BMUs 42, and the storage units 81 are each denoted with numeral "A" or "B".

In the charging/discharging apparatus 101, the communication control device 8A and the communication control device 8B are mutually communicably connected to each other. As well as the first embodiment, a storage unit 81A of the communication control device 8A stores voltage values of the respective battery modules 4A(1) to 4A(n) belonging to the battery module group 104A in advance. Also, a storage unit 81B of the communication control device 8B stores voltage values of the respective battery modules 4B(1) to 4B(n) belonging to the battery module group 104B in advance.

In such a charging/discharging apparatus 101, in a case of charging the battery modules 4 with electric power supplied from the power generation device 2, the communication control device 8A and the communication control device 8B places only one of all the first switches 6, which corresponds to the battery module 4 of which the storage battery 41 has a lowest voltage value among the voltage values of all the battery modules 4 stored in the storage units 81A, 81B, in the ON state. That is, the battery module 4 with the lowest voltage value is selected from all the battery modules 4 of the battery module groups 104A, 104B, and only the first switch 6 corresponding to the selected battery module 4 is rendered ON.

For example, the communication control device 8A and the communication control device 8B compare voltage values of the storage batteries 41A stored in the storage unit 81A with voltage values of the storage batteries 41B stored in the storage unit 81B, and places the first switch 6 corresponding to the battery module 4 based on the compared voltage values.

In addition, if a supply voltage from the power generation device 2 is less than a voltage required for the operation of the BMU 42 and the communication control device 8 (hereinafter referred to as "operating voltage"), the charging/discharging apparatus 101 causes the battery module 4 of which the first switch 6 is currently in the ON state to supply electric power to the BMU 42 and the communication control device 8.

At this time, if the voltage value of the storage battery 41 of this battery module 4 becomes less than a predetermined value obtained by adding a predetermined margin to the operating voltage, there is concern that the BMU 42 and the communication control device 8 may not be maintained to be activated. That is, there is concern that electric power required for operating the BMU 42 and the communication control device 8 cannot be supplied thereto.

Hence, in the charging/discharging apparatus 101, in a case where the supply voltage from the power generation device 2 is less than the operating voltage, and a voltage value of the storage battery 41, which is currently connected to the connection path 5 via the first switch 6 in the ON state, is less than the predetermined value, another storage battery 41 having a voltage value equal to or higher than the predetermined value is, instead of said storage battery 41, to be connected to the connection path 5. Specifically, the first switch 6 corresponding to said storage battery 41 is switched from the ON state to the OFF state, and another first switch 6 corresponding to the another battery module 4 having the voltage value equal to or higher than the predetermined value is switched from the OFF state to the ON state.

Here, in a case where the first switch 6 of one of the battery module group 104A and the battery module group 104B is switched to OFF state while the first switch 6 of the other is switched to ON state, that is, when, instead of the storage battery 41 of the one battery module group, the storage battery 41 of the other battery module group is to be connected to the connection path 5, the communication control device 8 for the other battery module group is not identical to that for the one battery module group (i.e., non-identical communication control devices 8A, 8B are used for the switching in the respective battery module groups). Due thereto, in each of battery module groups 104A, 104B, the duplicated CAN_IDs are not used for the BMUs 42 at the same time (i.e., in each of battery module groups 104A, 104B, the common CAN_ID is used for single BMU 42).

Hence, for example, when the connection to the connection path 5 is switched from the storage battery 41A of the battery module group 104A to the storage battery 41B of the battery module group 104B, switching of the first switch 6A from the ON state to the OFF state and switching of the first switch 6B from the OFF state to the ON state are simultaneously performed. Alternatively, the switching of the first switch 6A may be performed after the switching of the first switch 6B.

On the other hand, when the first switch 6 to be rendered ON is switched in one of the battery module groups 104A, 104B, that is, e.g., when in the battery module group 104A, switching of the first switch 6A(1) from ON state to OFF state and switching of the first switch 6A(2) from OFF state to ON state are performed, it is desirable to perform the latter switching of the first switch 6A(2) after the former switching of the first switch 6A(1), so that the CAN_IDs are not duplicated in the communication control device 8A (i.e., so that the duplicated CAN_IDs are not used in the battery module group 104A at the same time).

However, in this case, at the timing of switching the first switch 6A(1) to the OFF state, all the first switches 6 are placed in the OFF state and thereby, the power supply to the communication control device 8 is cut off, not enabling the first switch 6A(2), which is to be switched to the ON state, to be switched so.

Then, in the present embodiment, in a case of switching, in one of the battery module groups 104A, 104B, the battery module 4 of which the first switch 6 is in the ON state, the storage battery 41 of one of the battery modules 4 in the other battery module group is connected to the connection path 5 until switching of the battery module 4 in the one battery module group is completed, so that the power supply to the communication control devices 8A, 8B is not cut off.

Specifically, for example, in a case of switching the battery module 4A of which the first switch 6A is in the ON state in the battery module group 104A, this battery module 4A is switched to the OFF state after the first switch 6B of one of the battery modules 4B in the battery module group 104B is switched to the ON state.

In this case, after the battery module 4A is switched to the ON state in the battery module group 104A, the switched first switch 6B to the ON state in the battery module group 104B is switched to the OFF state again.

An example of the case where the connection of the storage battery 41 to the connection path 5 is switched (i.e., the respective first switches 6 are switched to ON/OFF) in the same battery module group will be described with reference to Fig. 4.

Fig. 4 is a timing chart exemplifying the case where in battery module group 104A the connection to the connection path 5 is switched from the battery module 4A(1) to the battery module 4A(2). Note that in this example, a supply voltage from the power generation device 2 is assumed to be less than the respective operating voltages for the BMU 42 and the communication control device 8.

As illustrated in Fig. 4, the first switch 6A(1) corresponding to the battery module 4A(1) is placed into the ON state before time t1 and is maintained to be in the ON state at time t1, by which power is supplied from the battery module 4A(1) belonging to the battery module group 104A to each of the BMU 42A(1) and the communication control device 8A.

At time t1 when the voltage value of the storage battery 41 of the battery module 4A(1) becomes less than a predetermined value, a first switch 6B(1) corresponding to a battery module 4B(1) belonging to the battery module group 104B is placed into the ON state.

Thereafter, at time t2, the first switch 6A(1) corresponding to the battery module 4A(1) is placed into the OFF state. In this way, the connection between the battery module group 104A and the connection path 5 is temporarily cut off. At this time, since the first switch 6B(1) corresponding to the battery module 4B(1) is already placed into the ON state, the battery module group 104B is connected to the connection path 5. Due thereto, the power supply to the communication control device 8A is maintained by the battery module group 104B even while the connection between the battery module group 104A and the connection path 5 is temporarily cut off.

Thereafter, at time t3, the first switch 6A(2) corresponding to the battery module 4A(2) is placed into the ON state. In this way, the battery module group 104A is connected to the connection path 5, and electric power can be supplied from the battery module group 104A to the communication control device 8A.

Thereafter, at time t4, the first switch 6B(1) corresponding to the battery module 4B(1) is placed into the OFF state.

In this way, in the example illustrated in Fig. 4, since, in the battery module group 104A, the connection to the connection path 5 is switched from the battery module 4A(1) to the battery module 4A(2) with the first switch 6B(1) of the battery module 4B(1) being placed in the ON state, the voltage value of the connection path 5 is maintained at the operating voltage or more even during the switching.

As described above, the charging/discharging apparatus 101 is configured such that in the case where the supply voltage from the power generation device 2 is less than the operating voltages for the BMU 42 and the communication control device 8, when in one battery module group, battery module 4 of which the first switch 6 is in the ON state is switched to OFF state and another battery module 4 of which the first switch 6 is in the OFF state is switched to ON state, such a switching is performed after the first switch 6 of one of the battery modules 4 in the other battery module group is switched to the ON state.

With this configuration, even when the supply voltage from the power generation device 2 is insufficient, the charging/discharging apparatus 101 can switch the battery modules 4 in one battery module group so as to place one battery module 4, of which the first switch 6 is in the ON state, and another battery module 4, of which the first switch 6 is in the OFF state, into OFF state and the ON state respectively, while maintaining the operating voltages for the BMU 42 and the communication control device 8.

In addition, the charging/discharging apparatus 101 is configured such that after the switching is performed in the one battery module group, the already-switched first switch 6 to the ON state in the other battery module group is switched to the OFF state.

With this configuration, the charging/discharging apparatus 101 can, even when battery modules with the same specifications which used to be mounted on a vehicle are reused, individually and properly control the reused battery modules by one communication control device.

While embodiments of this invention have been described, it is apparent that changes can be made without departing from the scope of the invention, as defined by the appended claims.

### (DESCRIPTION OF REFERENCE NUMERALS)

1, 101: Charging/discharging apparatus
2: Power generation device (power supply device)
3: Electric load
4: Battery module
5: Connection path
6: First switch
7: Second switch
8: Communication control device
9: Various sensors
41: Storage battery
42: BMU
81: Storage unit
104: Battery module group

## Claims

1. A charging/discharging apparatus (1, 101) comprising:
a power supply device (2) to supply electric power;
an electric load (3);
a connection path (5) to be selectively connected to one of the power supply device (2) and the electric load (3); and
a plurality of battery module groups (104A, 104B) to be connected to the connection path (5),
wherein each battery module group includes:
a plurality of battery modules (4) to be connected, in parallel to each other, to the connection path (5);
a plurality of first switches (6) each disposed between the corresponding battery module (4) and the connection path (5), each of the first switches switching between an ON state where the corresponding battery module (4) and the connection path (5) are interconnected, and an OFF state where these are disconnected from each other; and
a communication control device (8) connected to the connection path (5) and configured to control the first switches (6),
the battery modules (4) respectively include a plurality of storage batteries (41), and
the communication control device (8) includes a storage unit (81) for storing voltage values or SOCs of the storage batteries (41) in association with the respective battery modules (4); and
the communication control device (8) is configured to place only one switch of all the first switches (6) in the ON state based on the stored voltage values or SOCs in the storage unit (81), when the connection path (5) is connected to the power supply device (2),
**characterized in that**
the battery modules (4) further include, respectively, a plurality of BMUs (42) communicatable with the communication control device (8) using a common identification signal, each BMU managing a state of the corresponding storage battery (41), and
if a supply voltage from the power supply device (2) is less than respective operating voltages for the BMU (42A, 42B) and the communication control device (8A, 8B), the communication control device (8A, 8B) in one of the battery module groups (104A, 104B), to which the one switch (6A, 6B) in the ON state belongs, is configured to switch the one switch and another first switch therein to the OFF and ON state respectively after the communication control device (8B, 8A) in another battery module group (104B, 104A) switches one of the first switches (6B, 6A) therein to the ON state.

2. The charging/discharging apparatus according to claim 1, wherein
after the switching by the communication control device (8A, 8B) in the one battery module group (104A, 104B) is performed, the communication control device (8B, 8A) in the another battery module group (104B, 104A) is configured to switch the switched one first switch (6B, 6A) therein to the OFF state.

3. The charging/discharging apparatus according to claim 1 or 2, further comprising
a second switch (7) disposed among the connection path (5), the power supply device (2), and the electric load (3), the second switch (7) being configured to selectively connect the connection path (5) to one of the power supply device (2) and the electric load (3).

4. The charging/discharging apparatus according to any one of claims 1 to 3,
wherein the power supply device (2) is a power generation device for generating electric power using renewable energy.

5. The charging/discharging apparatus according to any one of claims 1 to 4,
wherein the electric load (3) is a device having a light-emitting body as a load.

## Patentansprüche

1. Lade-/Entladevorrichtung (1, 101), umfassend:
eine Stromversorgungseinrichtung (2) zum Versorgen mit elektrischem Strom;
eine elektrische Last (3);
einen Verbindungspfad (5), der wahlweise mit einer von der Stromversorgungseinrichtung (2) und der elektrischen Last (3) zu verbinden ist; und
eine Vielzahl von Batteriemodulgruppen (104A, 104B), die mit dem Verbindungspfad (5) zu verbinden ist,
wobei jede Batteriemodulgruppe Folgendes beinhaltet:
eine Vielzahl von Batteriemodulen (4), die parallel zueinander mit dem Verbindungspfad (5) zu verbinden ist;
eine Vielzahl von ersten Schaltern (6), wobei jeder zwischen dem entsprechenden Batteriemodul (4) und dem Verbindungspfad (5) angeordnet ist, wobei jeder der ersten Schalter zwischen einem EIN-Zustand, in dem das entsprechende Batteriemodul (4) und der Verbindungspfad (5) miteinander verbunden sind, und einem AUS-Zustand, in dem diese voneinander getrennt sind, schaltet; und
eine Kommunikationssteuereinrichtung (8), die mit dem Verbindungspfad (5) verbunden und dazu konfiguriert ist, die ersten Schalter (6) zu steuern, wobei die Batteriemodule (4) jeweils eine Vielzahl von Speicherbatterien (41) beinhalten, und die Kommunikationssteuereinrichtung (8) eine Speichereinheit (81) zum Speichern von Spannungswerten oder SOCs der Speicherbatterien (41) in Verbindung mit den jeweiligen Batteriemodulen (4) beinhaltet; und
die Kommunikationssteuerungseinrichtung (8) dazu konfiguriert ist, nur einen Schalter aller ersten Schalter (6) basierend auf den gespeicherten Spannungswerten oder SOCs in der Speichereinheit (81) in den EIN-Zustand zu schalten, wenn der Verbindungspfad (5) mit der Stromversorgungseinrichtung (2) verbunden ist,
**dadurch gekennzeichnet, dass**
die Batteriemodule (4) ferner jeweils eine Vielzahl von BMUs (42) beinhalten, die mit der Kommunikationssteuerungseinrichtung (8) unter Verwendung eines gemeinsamen Identifikationssignals kommunizieren kann, wobei jede BMU einen Zustand der entsprechenden Speicherbatterie (41) verwaltet, und
die Kommunikationssteuereinrichtung (8A, 8B) in einer der Batteriemodulgruppen (104A, 104B), zu der der eine Schalter (6A, 6B) in dem EIN-Zustand gehört, dazu konfiguriert ist, den einen Schalter und einen anderen ersten Schalter darin in den AUS- bzw. EIN-Zustand zu schalten, nachdem die Kommunikationssteuereinrichtung (8B, 8A) in einer anderen Batteriemodulgruppe (104B, 104A) einen der ersten Schalter (6B, 6A) darin in den EIN-Zustand geschaltet hat, wenn eine Versorgungsspannung von der Stromversorgungseinrichtung (2) geringer ist als eine jeweilige Betriebsspannung für die BMU (42A, 42B) und die Kommunikationssteuereinrichtung (8A, 8B).

2. Lade-/Entladevorrichtung nach Anspruch 1, wobei
die Kommunikationssteuereinrichtung (8B, 8A) in der anderen Batteriemodulgruppe (104B, 104A) nach Durchführen des Schaltens durch die Kommunikationssteuereinrichtung (8A, 8B) in der einen Batteriemodulgruppe (104A, 104B) dazu konfiguriert ist, den geschalteten ersten Schalter (6B, 6A) darin in den AUS-Zustand zu schalten.

3. Lade-/Entladevorrichtung nach Anspruch 1 oder 2, ferner umfassend
einen zweiten Schalter (7), der zwischen dem Verbindungspfad (5), der Stromversorgungseinrichtung (2) und der elektrischen Last (3) angeordnet ist, wobei der zweite Schalter (7) dazu konfiguriert ist, den Verbindungspfad (5) wahlweise mit einer von der Stromversorgungseinrichtung (2) und der elektrischen Last (3) zu verbinden.

4. Lade-/Entladevorrichtung nach einem der Ansprüche 1 bis 3, wobei die Stromversorgungseinrichtung (2) eine Stromerzeugungseinrichtung zum Erzeugen von elektrischem Strom unter Verwendung von erneuerbarer Energie ist.

5. Lade-/Entladevorrichtung nach einem der Ansprüche 1 bis 4, wobei die elektrische Last (3) eine Einrichtung ist, die einen Licht emittierenden Körper als Last aufweist.

## Revendications

1. Appareil de chargement/déchargement (1, 101) comprenant :
un dispositif d'alimentation électrique (2) pour fournir de l'énergie électrique ;
une charge électrique (3) ;
un chemin de connexion (5) à connecter sélectivement à l'un du dispositif d'alimentation électrique (2) et de la charge électrique (3) ; et
une pluralité de groupes de modules de batterie (104A, 104B) à connecter au chemin de connexion (5),
dans lequel chaque groupe de modules de batterie comporte :
une pluralité de modules de batterie (4) à connecter, en parallèle les uns aux autres, au chemin de connexion (5) ;
une pluralité de premiers commutateurs (6) disposés chacun entre le module de batterie (4) correspondant et le chemin de connexion (5), chacun des premiers commutateurs commutant entre un état ON où le module de batterie (4) correspondant et le chemin de connexion (5) sont interconnectés, et un état OFF où ceux-ci sont déconnectés l'un de l'autre ; et
un dispositif de commande de communication (8) connecté au chemin de connexion (5) et configuré pour commander les premiers commutateurs (6), les modules de batterie (4) comportent respectivement une pluralité de batteries de stockage (41), et
le dispositif de commande de communication (8) comporte une unité de stockage (81) pour stocker les valeurs de tension ou les SOC des batteries de stockage (41) en association avec les modules de batterie respectifs (4) ; et
le dispositif de commande de communication (8) est configuré pour placer un seul commutateur de tous les premiers commutateurs (6) à l'état ON sur la base des valeurs de tension ou SOC stockées dans l'unité de stockage (81), lorsque le chemin de connexion (5) est connecté au dispositif d'alimentation électrique (2),
**caractérisé en ce que**
les modules de batterie (4) comportent également, respectivement, une pluralité de BMU (42) pouvant communiquer avec le dispositif de commande de communication (8) à l'aide d'un signal d'identification commun, chaque BMU gérant un état de la batterie de stockage correspondante (41), et
si une tension d'alimentation provenant du dispositif d'alimentation électrique (2) est inférieure aux tensions de fonctionnement respectives du BMU (42A, 42B) et du dispositif de commande de communication (8A, 8B), le dispositif de commande de communication (8A, 8B) dans l'un des groupes de modules de batterie (104A, 104B), auquel appartient l'un commutateur (6A, 6B) dans l'état ON, est configuré pour commuter l'un commutateur et un autre premier commutateur dans celui-ci vers l'état OFF et ON respectivement après que le dispositif de commande de communication (8B, 8A) dans un autre groupe de modules de batterie (104B, 104A) commute l'un des premiers commutateurs (6B, 6A) dans celui-ci vers l'état ON.

2. Appareil de chargement/déchargement selon la revendication 1, dans lequel
après que la commutation par le dispositif de commande de communication (8A, 8B) dans l'un groupe de modules de batterie (104A, 104B) est réalisée, le dispositif de commande de communication (8B, 8A) dans l'autre groupe de modules de batterie (104B, 104A) est configuré pour commuter l'un premier commutateur commuté (6B, 6A) dans celui-ci à l'état OFF.

3. Appareil de chargement/déchargement selon la revendication 1 ou 2, comprenant également
un second commutateur (7) disposé entre le chemin de connexion (5), le dispositif d'alimentation électrique (2) et la charge électrique (3), le second commutateur (7) étant configuré pour connecter sélectivement le chemin de connexion (5) à l'un du dispositif d'alimentation électrique (2) et de la charge électrique (3).

4. Appareil de chargement/déchargement selon l'une quelconque des revendications 1 à 3,
dans lequel le dispositif d'alimentation électrique (2) est un dispositif de génération d'énergie destiné à générer de l'énergie électrique à l'aide d'énergie renouvelable.

5. Appareil de chargement/déchargement selon l'une quelconque des revendications 1 à 4,
dans lequel la charge électrique (3) est un dispositif ayant un corps émetteur de lumière comme charge.
